Europäisches Patentamt

European Patent Office

Office européen des brevets

(11) Veröffentlichungsnummer: **0 330 015 B1**

# EUROPÄISCHE PATENTSCHRIFT

(45) Veröffentlichungstag der Patentschrift: **04.05.94**

(51) Int. Cl.5: **C08L 23/10**, C08L 77/00

(21) Anmeldenummer: **89102194.1**

(22) Anmeldetag: **09.02.89**

(54) **Thermoplastische Polypropylen-Polyamid-Formmassen, Verfahren zu ihrer Herstellung und ihre Verwendung.**

(30) Priorität: **20.02.88 DE 3805377**

(43) Veröffentlichungstag der Anmeldung:
**30.08.89 Patentblatt 89/35**

(45) Bekanntmachung des Hinweises auf die
Patenterteilung:
**04.05.94 Patentblatt 94/18**

(84) Benannte Vertragsstaaten:
**BE DE FR GB NL**

(56) Entgegenhaltungen:
**EP-A- 0 050 471**
**EP-A- 0 188 123**
**DE-A- 3 444 096**

(73) Patentinhaber: **BASF Aktiengesellschaft**
**Carl-Bosch-Strasse 38**
**D-67063 Ludwigshafen(DE)**

(72) Erfinder: **Lausberg, Dietrich, Dr.**
**Nachtigalstrasse 32 a**
**D-6700 Ludwigshafen(DE)**
Erfinder: **Seiler, Erhard, Dr.**
**Erpolzheimer Strasse 1**
**D-6700 Ludwigshafen(DE)**
Erfinder: **Plachetta, Christoph, Dr.**
**Albert-Einstein-Allee 12**
**D-6703 Limburgerhof(DE)**
Erfinder: **Braun, Hans-Georg, Dr.**
**Weinbergerstrasse 6**
**D-6718 Grünstadt(DE)**
Erfinder: **Blinne, Gerd, Dr.**
**Im Woogtal 7**
**D-6719 Bobenheim(DE)**

**Beschreibung**

Die Erfindung betrifft neue Polypropylen-Polyamid-Formmassen, enthaltend, jeweils bezogen auf 100 Gew.-Teile der Formmassen,

A) 10 bis 89,5 Gew.-Teile mindestens eines Polypropylenmono- und/oder -copolymerisats,

B) 10 bis 89,5 Gew.-Teile mindestens eines Polyamids,

C) 0,5 bis 30 Gew.-Teile eines Ethylencopolymerisats als Haftvermittler, das aufgebaut ist aus

a) 50 bis 98 Gew.-% Ethylen,

b) 1 bis 45 Gew.-% mindestens eines Alkyl(meth)acrylat mit 1 bis 8 C-Atomen in einem linearen oder verzweigten Alkylrest mit Ausnahme von tert.-Butyl(meth)acrylat und

c) 1 bis 40 Gew.-% mindestens eines weiteren Monomeren, das eine gegenüber dem Polyamid reaktive Gruppe gebunden enthält,

wobei die Gew.-Prozente bezogen sind auf das Gesamtgewicht der Monomeren (c), (b) und (c) und stets 100 Gew.-% ergeben.

Polypropylen-homo- und copolymerisate - im folgenden auch abgekürzt PP genannt - besitzen im allgemeinen gute mechanische Eigenschaften, eine gute Verarbeitbarkeit und Wasserbeständigkeit. Die Anwendung von Polypropylenen wird jedoch begrenzt durch die unzureichende Wärmeformbeständigkeit, ungenügende Tieftemperaturzähigkeit und mangelhafte Beständigkeit gegen organische Lösungsmittel.

Dieser Mangel könnte durch den Zusatz von Polyamiden - im folgenden auch abgekürzt PA genannt -, das die genannten Eigenschaften in herausragendem Maße aufweist, zumindest vermindert oder egalisiert werden. Andererseits zeigt jedoch PA ein unerwünscht hohes Wasseraufnahmevermögen.

Insbesondere nachteilig ist jedoch die Unverträglichkeit von PP mit PA, so daß einfache Gemische kein technisch brauchbares Eigenschaftsniveau besitzen.

Mit Glasfasern verstärkte PP-PA-Zusammensetzungen werden in der DE-A-35 07 128 (US-A-4 613 647) beschrieben. Zur Verbesserung der Haftung zwischen dem unpolaren PP und den Glasfasern wird ein mit ungesättigten Carbonsäuren oder einem Anhydrid davon modifiziertes PP eingesetzt. Durch die Erhöhung der Anhaftung zwischen PP und Glasfasern wird jedoch das Aussehen von daraus hergestellten Formkörpern verschlechtert.

Zur Reduzierung des Glasfasergehalts und Verbesserung des Aussehens wurden deshalb PA, insbesondere Nylon-6 oder Nylon-66, und Glasfasern zu PP hinzugegeben. Derartige Zusammensetzungen, die aus PP, modifiziertem PP, einem üblichen PA, z.B. Nylon-6 oder Nylon-66, und Glasfasern bestehen, haben jedoch keine ausreichende mechanische Festigkeit und die Härte wird durch die Feuchtigkeitsabsorption der eingesetzten Nylontypen erheblich vermindert.

Nach Angaben der DE-A-35 07 128 konnte dieser Mangel durch die Verwendung eines speziellen PA, das durch Polykondensation von Metaxylendiamin und Adipinsäure hergestellt wurde (Nylon-MXD6) beseitigt werden. Nachteilig an dieser PP-Zusammensetzung ist, daß die Aufbaukomponenten schwer zugänglich sind und auch die mechanischen Eigenschaften, insbesondere die Tieftemperaturzähigkeit, unbefriedigend sind.

Unbefriedigend ist auch die Zähigkeit von thermoplastischen Formmassen aus 10 bis 90 Gew.% eines mit Säuregruppen modifizierten PP, gegebenenfalls nicht modifiziertem PP und 90 bis 10 Gew.% eines PA, die zusätzlich pro 100 Gew.-Teilen der Mischung 2 bis 30 Gew.-Teile eines Epoxygruppen aufweisenden Copolymeren enthalten und beschrieben werden in der EP-A-0 180 302.

Aus der EP-A-188 123 sind Filme aus PP und PA bekannt, die als Haftvermittler Ethylenmethylacrylat, Ethylenacrylsäure, ein Jonomer, Ethylenvinylacetat, Anhydrid modifiziertes PP. Polyethyloxazoline oder Stearylstearamid enthalten. Obgleich über die Eigenschaften der Filme keine Angaben gemacht werden, so wird doch behauptet, daß das Polyamid in Form von Partikeln mit einer Größe von 8 $\mu$m oder kleiner in dem Film eingelagert sei. Durchgeführte Versuche zeigten jedoch, daß keiner der genannten Haftvermittler bei Formmassen zu einem brauchbaren Ergebnis führte.

Die Aufgabe der vorliegenden Erfindung bestand darin, thermoplastische PP-PA-Formmassen mit hoher Zähigkeit, Steifigkeit und Wärmeformbeständigkeit zur Verfügung zu stellen.

Diese Aufgabe konnte überraschenderweise durch den Zusatz eines speziellen Ethylencopolymerisats als Haftvermittler zu PP-PA-Formmassen gelöst werden.

Gegenstände der Erfindung sind somit thermoplastische Polypropylen-Polyamid-Formmassen, enthaltend, jeweils bezogen auf 100 Gew.-Teile der Formmassen,

A) 10 bis 89,5 Gew.-Teile mindestens eines Polypropylenmono- und/oder -copolymerisats,

B) 10 bis 89,5 Gew.-Teile mindestens eines Polyamids,

c) 0,5 bis 30 Gew.-Teile eines Ethylencopolymerisats als Haftvermittler, das aufgebaut ist aus

a) 50 bis 98 Gew.-% Ethylen,

EP 0 330 015 B1

b) 1 bis 45 Gew.-% mindestens eines Alkyl(meth)acrylat mit 1 bis 8 C-Atomen in einem linearen oder verzweigten Alkylrest mit Ausnahme von tert.-Butyl(meth)acrylat und

c) 1 bis 40 Gew.-% mindestens eines weiteren Monomeren, das eine gegenüber dem Polyamid reaktive Gruppe gebunden enthält,

wobei die Gew.-Prozente bezogen sind auf das Gesamtgewicht der Monomeren (c), (b) und (c) und stets 100 Gew.-% ergeben, ein Verfahren zur Herstellung der thermoplastischen PP-PA-Formmassen nach einem der Ansprüche 1 bis 8 gemäß Anspruch 9 und die Verwendung der PP-PA-Formmassen nach einem der Ansprüche 1 bis 8 zur Herstellung von Formkörpern gemäß Anspruch 10 sowie Formkörper, erhältlich aus den PP-PA-Formmassen nach einem der Ansprüche 1 bis 8 gemäß Anspruch 11.

Außerdem wurden spezielle Ausgestaltungen der thermoplastischen Formmassen gemäß den Unteransprüchen 2 und 3 gefunden.

Die erfindungsgemäßen thermoplastischen PP-PA-Formmassen bestehen zweckmäßigerweise aus, jeweils bezogen auf 100 Gew.-Teile der Formmassen,

A) 10 bis 89,5 Gew.-Teilen, vorzugsweise 20 bis 85 Gew.-Teilen mindestens eines Polypropylen-co- und/oder vorzugsweise -homopolymerisats,

B) 10 bis 89,5 Gew.-Teilen, vorzugsweise 25 bis 75 Gew.-Teilen mindestens eines Polyamids,

C) 0,5 bis 30 Gew.-Teilen, vorzugsweise 2 bis 25 Gew.-Teilen eines Ethylencopolymerisats als Haftvermittler, das seinerseits zweckdienlicherweise aufgebaut ist aus, jeweils bezogen auf (C)

a) 50 bis 98 Gew.%, vorzugsweise 60 bis 95 Gew.% Ethylen,

b) 1 bis 45 Gew.%, vorzugsweise 10 bis 35 Gew.% mindestens eines Alkyl(meth)acrylats mit 1 bis 8 C-Atomen in einem linearen oder verzweigten Alkylrest, vorzugsweise n-Butyl(meth)acrylat und/oder 2-Ethylhexyl(meth)acrylat, mit Ausnahme von tert.-Butyl(meth)acrylat,

c) 1 bis 40 Gew.%, vorzugsweise 2 bis 20 Gew.%, mindestens eines weiteren Monomeren, das unter den Reaktionsbedingungen zur Herstellung der PP-PA-Formmassen eine gegenüber dem Polyamid (B) reaktive Gruppe gebunden enthält und vorteilhafterweise ausgewählt wird aus der Gruppe der olefinisch ungesättigten Monocarbonsäuren und den entsprechenden tert. -Butylestern, olefinisch ungesättigten Dicarbonsäuren und den entsprechenden mono- oder di-tert.-Butylestern, olefinisch ungesättigten Dicarbonsäureanhydriden und Sulfo-, Sulfonyl-, Oxazolin- oder Epoxidgruppen aufweisenden olefinisch ungesättigten Monomeren

D) 0 bis 30 Gew.-Teilen, vorzugsweise 0 bis 25 Gew.-Teilen eines Schlagzäh modifizierenden Mittels und

E) 0 bis 60 Gew.-Teilen, vorzugsweise 0 bis 50 Gew.-Teilen eines Verstärkungsmittels und/oder Zusatzstoffes.

Zur stofflichen Seite der neuen, erfindungsgemäßen PP-PA-Formmassen, deren Herstellung und ihre Verwendung ist im einzelnen das folgende auszuführen:

A) Geeignete Polypropylene sind aus der Polymerchemie bekannt, werden z.B. im Kunststoff-Handbuch, Band IV, Polyolefine, herausgegeben von R. Vieweg, A. Schley und A. Schwarz, Carl Hanser Verlag, München, 1969, beschrieben und sind im Handel erhältlich, so daß sich nähere Angaben praktisch erübrigen.

Anwendung finden vorzugsweise Polypropylenhomopolymerisate, insbesondere solche, die durch Polymerisation von Propylen in Gegenwart eines Ziegler-Natta-Katalysatorsystems hergestellt werden und einem Schmelzindex MFI von 0,1 bis 10 g/10 min bei 190°C und 2,16 kg besitzen und einen Zug-E-Modul von größer 300/Nmm$^2$ aufweisen.

Geeignet sind jedoch auch Copolymerisate, hergestellt z.B. durch statistische Copolymerisation oder Blockcopolymerisation, aus Propylen und Ethylen, $\alpha$-Olefinen, wie z.B. Buten-1, Penten-1, 3-Methylpenten-1, Hexen-1, Hepten-1 oder Octen-1 oder Dienen, wie z.B. Norbornadien oder Dicyclopentadien.

B) Als Komponente (B) enthalten die erfindungsgemäßen thermoplastischen PP-PA-Formmassen ein Polyamid oder Mischungen aus mehreren Polyamiden. Grundsätzlich in Betracht kommen teilkristalline und amorphe PA, wobei jedoch teilkristalline PA bevorzugt Anwendung finden, da die daraus hergestellten Formmassen in der Regel solchen aus amorphen PA hinsichtlich der Wärmeform- und Spannungsrißbeständigkeit überlegen sind. Erfindungsgemäß einsetzbare PA sind an sich bekannt und umfassen z.B. PA mit Molekulargewichten von 5.000 und mehr, vorzugsweise von 5.000 bis 70.000 und insbesondere von 10.000 bis 65.000, wie sie z.B. in den US-A-2 071 250, 2 071 251, 2 130 523, 2 130 948, 2 241 322, 2 312 966, 2 512 906 und 3 393 210 beschrieben werden.

Die PA können z.B. hergestellt werden durch Kondensation äquimolarer Mengen einer gesättigten Dicarbonsäure mit 4 bis 12 Kohlenstoffatomen, vorzugsweise 6 bis 12 Kohlenstoffatomen, mit einem Diamin, welches 4 bis 14 Kohlenstoffatome aufweist, durch Kondensation von $\Omega$-Aminocarbonsäuren oder durch Polyaddition von Lactamen. Beispiele für PA sind Polyhexamethylenadipinsäureamid (Nylon 66),

3

EP 0 330 015 B1

Polyhexamethylenazaleinsäureamid(Nylon 69), Polyhexamethylensebacinsäureamid (Nylon 610), Polyhexamethylendodecandisäureamid (Nylon 612), die durch Ringöffnung von Lactamen erhaltenen PA, wie Polycaprolactam, Polylaurinsäurelactam, ferner Poly-11-aminoundecansäure und Di-(p-aminocyclohexyl)-methandodecandisäureamid. Es ist auch möglich, gemäß der Erfindung PA zu verwenden, die durch Copolykondensation von mindestens zwei der oben genannten Polymeren oder ihrer Aufbaukomponenten hergestellt worden sind, z.B. ein Copolymeres aus Adipinsäure, Isophthalsäure und Hexamethylendiamin. Vorzugsweise sind die PA linear und haben Schmelzpunkte von mehr als 200°C, vorzugsweise von 205 bis 310°C.

Bevorzugt angewandte PA sind Polyhexamethylenadipinsäureamid` Polyhexamethylensebacinsäureamid und Polycaprolactam. Die PA weisen im allgemeinen eine relative Viskosität von 2,5 bis 5, vorzugsweise von 2,8 bis 4,5 auf, bestimmt an einer 1 gew.%igen Lösung in $H_2SO_4$ bei 23°C, was einem Molekulargewicht (Gewichtsmittelwert) von etwa 15.000 bis 45.000 entspricht. Selbstverständlich können auch Mischungen aus zwei oder mehreren PA eingesetzt werden. Der Anteil des PA (B) an den erfindungsgemäßen PP-PA-Formmassen beträgt zweckmäßigerweise, wie bereits ausgeführt wurde, 10 bis 89,5 Gew.%, bezogen auf das Gesamtgewicht. PP-PA-Formmassen mit einem Gehalt an PA (B) von 25 bis 75 Gew.%, insbesondere von 25 bis 70 Gew.% werden besonders bevorzugt.

C) Als erfindungswesentliche Aufbaukomponente enthalten die neuen PP-PA-Formmassen als Haftvermittler ein Ethylencopolymerisat (C) in einer wirksamen Menge, beispielsweise in einer Menge von 0,5 bis 30 Gew.%, vorzugsweise 2 bis 25 Gew.%, bezogen auf das Gesamtgewicht der PP-PA-Formmasse.

Wie bereits ausgeführt wurde, besitzen die Ethylencopolymerisate (C), bezogen auf das Gesamtgewicht, zweckmäßigerweise einen Ethylengehalt (a) von 50 bis 98 Gew.%, vorzugsweise von 60 bis 95 Gew.%, einen Alkyl(meth)acrylatgehalt (b) von 1 bis 45 Gew.%, vorzugsweise 10 bis 35 Gew.% und einen Gehalt an einem weiteren Comonomeren (c) mit einer mit Polyamid reaktiven Gruppe von 1 bis 40 Gew.%, vorzugsweise 2 bis 20 Gew.%.

a) Das Monomere Ethylen ist in der Polymerchemie hinreichend bekannt, so daß sich nähere Ausführungen erübrigen.

b) Als Acrylate und/oder Methacrylate (b) mit 1 bis 8 C-Atomen, vorzugsweise 2 bis 8 C-Atomen im linearen oder verzweigten Alkylrest finden (Meth)acrylsäureester Verwendung, bei welchen die Estergruppen der polymerisierten (Meth)acrylateinheiten im gebildeten Ethylencopolymerisat (C) unter den Reaktionsbedingungen zur Herstellung der PP-PA-Formmassen im wesentlichen nicht oder nur in untergeordnetem Maße mit dem Polyamid (B) reagieren. Beispielhaft genannt seien Methyl-, Ethyl-, n- und i-Propyl-, n- und i-Butyl-, n-Pentyl-, n-Hexyl-, 2-Ethylhexyl-, n-Heptyl- und n-Octylacrylat oder -methacrylat. Die Alkyl(meth)acrylate können einzeln oder in Form von Mischungen eingesetzt werden. Vorzugsweise Anwendung finden n-Butyl- und/oder 2-Ethylhexylacrylat.

c) Als Comonomere (c) kommen olefinisch ungesättigte Monomere in Betracht, die mit Ethylen und Alkyl(meth)acrylaten copolymerisierbar sind und eine reaktive Gruppe gebunden enthalten, welche im gebildeten Ethylencopolymerisat (C) unter den Reaktionsbedingungen zur Herstellung der PP-PA-Formmassen mit dem Polyamid (B) reagiert, wobei die chemische Verknüpfung in einem solchen Ausmaße eintritt, daß der Ankopplungsgrad an das PA nach beendeter Reaktion größer als 0,03 ist und vorzugsweise zwischen 0,05 bis 1 und insbesondere 0,08 bis 0,8 liegt. Der Ankupplungsgrad ist hierbei definiert als das Verhältnis aus mit Toluol aus der PP-PA-Formmasse nicht extrahierbarem Ethylencopolymerisat (C) zu der Gesamtmenge des eingesetzten Ethylencopolymerisats (C).

Als mit dem PA (B) reaktive Gruppen seien beispielsweise genannt, die Sulfo-, Sulfonyl-, Oxazolin-, Epoxidgruppe und vorzugsweise die Carboxyl-, tert.-Butylcarboxylat- und Carbonsäureanhydridgruppe.

Geeignete Monomere (c) zur Herstellung der Ethylencopolymerisate (C) sind beispielsweise olefinisch ungesättigte Monocarbonsäuren, wie z.B. Acrylsäure oder Methacrylsäure, und die entsprechenden tert.-Butylester, wie z.B. tert.-Butyl(meth)acrylat, olefinisch ungesättigte Dicarbonsäuren, wie z.B. Fumarsäure und Maleinsäure und die entsprechenden Mono- und/oder Di-tert.-Butylester, wie z.B. Fumarsäuremono- oder -di-tert.butylester und Maleinsäure-mono- oder di-tert.butylester, olefinisch ungesättigte Dicarbonsäureanhydride, wie z.B. Maleinsäureanhydrid, Sulfo- oder Sulfonylgruppen aufweisende olefinisch ungesättigte Monomere wie z.B. p-Styrolsulfonsäure, 2-(Meth)Acrylamido-2-methyl-propensulfonsäure oder 2-Sulfonyl(meth)acrylat, Oxazolingruppen aufweisende olefinisch ungesättigte Monomere, wie z.B. Vinyloxazoline und Vinyloxazolinderivate und Epoxidgruppen aufweisende olefinisch ungesättigte Monomere, wie z.B. Glycidyl(meth)acrylat oder Allylglycidylether.

Besonders bewährt haben sich als Comonomere (c) und daher vorzugsweise Anwendung finden Acrylsäure, Methacrylsäure, tert.-Butyl(meth)acrylat und/oder insbesondere Maleinsäureanhydrid.

Die genannten Comonomeren (c) können ebenso wie die Alkyl(meth)acrylate zur Herstellung des Ethylencopolymerisats (C) einzeln oder in Form von Mischungen eingesetzt werden.

4

Die Herstellung der erfindungsgemäß als Haftvermittler verwendbaren Ethylencopolymerisate (C) kann nach an sich bekannten Verfahren erfolgen, vorzugsweise durch statistische Copolymerisation unter hohem Druck, z.B. von 200 bis 4.000 bar und erhöhter Temperatur z.B. im Bereich von ungefähr 120 bis 300°C. Entsprechende Verfahren sind in Literatur-und Patentpublikationen beschrieben.

Der Schmelzindex geeigneter Ethylencopolymerisate (C) liegt vorteilhafterweise im Bereich von 1 bis 80 g/10 min, vorzugsweise 2 bis 25 g/10 min (gemessen bei 190°C und 2,16 kg Belastung nach DIN 53 735).

D) Neben den Aufbaukomponenten (A) bis (C) können die erfindungsgemäßen PP-PA-Formmassen zur Verbesserung der Schlagzähigkeit gegebenenfalls schlagzäh modifizierende Mittel, zweckmäßigerweise schlagzäh modifizierende Elastomere, enthalten. Schlagzähigkeitsverbessernde Elastomere für PA und PP sind dem Fachmann bekannt. Beispielhaft genannt seien die Kautschuke auf Ethylen-, Propylen-, Butadien- oder Acrylatbasis oder aus Mischungen dieser Monomeren.

Geeignete schlagzäh modifizierende Elastomere werden z.B. beschrieben in Methoden der organischen Chemie (Houben-Weyl), Band XIV/1, Makromolekulare Chemie (Georg-Thieme-Verlag, Stuttgart, 1961), Seiten 390 bis 406 oder in der Monographie von C.B. Bucknal, "Toughened Plastics" (Applied Science Publishers, London, 1977).

Einige bevorzugt angewandte Arten solcher Elastomerer werden im folgenden beispielhaft beschrieben:

Als bevorzugt eingesetzte Gruppe sind die sogenannten Ethylen-Propylen (EPM) bzw. Ethylen-Propylen-Dien-(EPDM)-kautschuke zu nennen, die zweckmäßigerweise ein Verhältnis von Ethylenresten zu Propylenresten im Bereich von 20:80 bis 80:20, vorzugsweise 40:60 bis 65:35, aufweisen.

Die Mooney-Viskositäten (MLI + 4/100°C) solcher unvernetzter EPM- bzw. EPDM-Kautschuke, deren Gelgehalte im allgemeinen unter 1 Gew.% betragen, liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie z.B. Penta-1,4-dien, Hexa-1,4-dien, 2,5-Dimethylhexa-1,5-dien, Hepta-1,4-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder Mischungen davon genannt. Bevorzugt angewandt werden Hexa-1,5-dien, Ethyliden-Norbornen und Dicyclopentadien. Der Diengehalt der EPDM-Kautschuke beträgt vorzugsweise 0,5 bis 10, insbesondere 1 bis 8 Gew.%, bezogen auf das Gesamtgewicht des Kautschuks.

Weiterhin sind als bevorzugt angewandte schlagzäh modifizierende Elastomere (D) Pfropfcopolymerisate mit Butadien, Butadien-Styrol-, Butadien-Acrylnitril-Copolymerisaten oder Acrylestern als Pfropfgrundlage zu nennen, wie sie z.B. in den DE-A-16 94 173 (US-A-3 564 077) und DE-A-23 48 377 (US-A-3 919 353) beschrieben werden.

Von diesen kommen insbesondere die sogenannten ABS-Polymerisate in Betracht, wie sie in den DE-A-20 35 390, DE-A-22 48 242 und der EP-A-22 216 beschrieben werden, wobei solche gemäß EP-A-22 216 besonders bevorzugt sind.

Als Elastomere (D) können auch Pfropfpolymerisate aus

25 bis 98 Gew.% eines Acrylatkautschuks mit einer Glasübergangstemperatur von unter -20°C als Pfropfgrundlage

und

2 bis 75 Gew.% eines copolymerisierbaren ethylenisch ungesättigten Monomeren, dessen Homo- bzw. Copolymerisate eine Glasübergangstemperatur von mehr als 25°C aufweisen, als Pfropfauflage

eingesetzt werden.

Die Pfropfgrundlage sind Acrylat- bzw. Methacrylatkautschuke, wobei bis zu 40 Gew.% weiterer Comonomerer enthalten sein können. Die $C_1$-$C_8$-Ester der (Meth)acrylsäure sowie deren halogenierte Derivate wie auch aromatische Acrylsäureester und deren Mischungen werden bevorzugt eingesetzt. Als Comonomere in der Pfropfgrundlage seien Acrylnitril, Methacrylnitril, Styrol, $\alpha$-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird vorteilhafterweise durch Copolymerisation mit 0,02 bis 5 Gew.%, vorzugsweise 0,05 bis 2 Gew.%, bezogen auf das Gewicht der Pfropfgrundlage, eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugt angewandte, vernetzend wirkende Monomere sind z.B. Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25°C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, $\alpha$-Methylstyrol, Acrylnitril, Methacrylnitril und Methylmethacrylat oder ihre Mischungen, insbesondere solche aus Styrol und Acrylnitril im Gewichtsverhältnis 90:10 bis 50:50. Ferner können bis zu 20 Gew.-% Comonomere. z.B. die unter (Cc) genannten Comonomeren eingesetzt werden.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß als Elastomere (D) verwendet werden können, werden z.B. in der DE-A-24 44 584 und der DE-A-27 26 256 beschrieben.

Die Elastomeren (D) weisen vorzugsweise eine Glasübergangstemperatur von unter -30°C, insbesondere von unter -40°C auf. was zu einer guten Schlagzähigkeit auch bei tiefen Temperaturen führt.

Die als schlagzäh modifizierende Mittel (D) beispielhaft genannten Elastomeren bzw. Kautschuke können sowohl einzeln als auch in Form von Mischungen eingesetzt werden.

E) Neben den Aufbaukomponenten (A) bis (C) sowie gegebenenfalls (D) können die erfindungsgemäßen PP-PA-Formmassen ferner Verstärkungsmittel und/oder Zusatzstoffe (E) enthalten. Der Anteil dieser Komponente (E) beträgt, wie bereits ausgeführt wurde, bis zu 60 Gew.%, vorzugsweise bis zu 50 Gew.%, bezogen auf das Gesamtgewicht der PP-PA-Formmasse.

Als Verstärkungsmittel können verstärkend wirkende Füllstoffe wie z.B. Asbest, Kohle oder vorzugsweise Fasern, beispielsweise Kohlenstoff- oder insbesondere Glasfasern, die mit Haftvermittler und/oder Schlichten ausgerüstet sein können, Anwendung finden. Geeignete Glasfasern, die z.B. auch in Form von Glasgeweben, -matten, -vliesen und/oder vorzugsweise Glasseidenrovings oder geschnittener Glasseide aus alkaliarmen E-Glasen mit einem Durchmesser von 5 bis 200 $\mu m$, vorzugsweise 8 bis 15 $\mu m$ eingesetzt werden, weisen nach ihrer Einarbeitung in die PP-PA-Formmassen im allgemeinen eine mittlere Faserlänge von 0,05 bis 1 mm, vorzugsweise von 0,1 bis 0,5 mm auf.

Andere geeignete Füllstoffe sind z.B. neben den vorgenannten. Wollastonit, Calciumcarbonat, Magnesiumcarbonat amorphe Kieselsäure, Calciumsilikat, Calciummetasilikat, Ouarzmehl. Talkum. Koalin, Glimmer, Feldspat, Glaskugeln, Si- oder Bornitrid sowie Mischungen dieser Füllstoffe.

Als besonders vorteilhaft haben sich insbesondere Glasfasern herausgestellt, besonders dann, wenn eine hohe Wärmeformbeständigkeit gefordert ist.

Als geeignete Zusatzstoffe seien beispielsweise genannt: Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, Keimbildungsmittel und Weichmacher.

Oxidationsverzögerer und Wärmestabilisatoren, die den PP-PA-Formmassen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis 1 Gew.%, bezogen auf das Gewicht der Formmasse, einsetzbar.

Beispiele für UV-Stabilisatoren sind verschiedene substituierte Resorcine. Salicylate, Benzotriazole und Benzophenone, die im allgemeinen in Mengen bis zu 2,0 Gew.%, bezogen auf das Gewicht der Formmasse, eingesetzt werden.

Gleit- und Entformungsmittel, die in der Regel ebenfalls in Mengen bis zu 1 Gew.%, bezogen auf das Gewicht der PP-PA-Formmasse zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden. Keimbildungsmittel, wie Talkum, Calciumfluorid, Natriumphenylphosphinat, Aluminiumoxid oder feinteiliges Polytetrafluorethylen können in Mengen z.B. bis zu 5 Gew.%, bezogen auf die Aufbaukomponenten (A) bis (E) angewandt werden.

Die erfindungsgemäßen PP-PA-Formmassen können nach beliebigen bekannten Verfahren hergestellt werden, bei denen aus den Aufbaukomponenten (A) bis (C) und gegebenenfalls (D) und/oder (E) im wesentlichen homogene Massen erhalten werden. Beispielsweise können die Aufbaukomponenten PP(A), PA(B), Ethylencopolymerisate (C) und gegebenenfalls schlagzäh modifizierende Mittel (D) und gegebenenfalls Verstärkungsmittel und/oder Zusatzstoffe (E) direkt gemischt werden oder es wird eine vorgefertigte Mischung aus (A) und (C) in das PA(B) eingebracht oder das Ethylencopolymerisat (C) einer PP-PA-Masse einverleibt, wobei die gegebenenfalls mitverwendeten schlagzäh modifizierenden Mittel (D), Verstärkungsmittel und/oder Zusatzstoffe (E) separat oder gemeinsam mit einer der Aufbaukomponenten (A), (B) oder (C) oder einer vorgefertigten Mischung aus (A) und (C), (B) und (C), (A) und (B) oder der erfindungsgemäßen PP-PA-Formmasse aus (A), (B) und (C) zugeführt werden können. Das Abmischen der Aufbaukomponenten (A), (B) und (C) und gegebenenfalls (D) und/oder (E) oder der vorgefertigten Mischungen aus einer oder mehrerer der Aufbaukomponenten (A) bis (E) wird vorteilhafterweise bei Temperaturen von 0 bis 150°C, vorzugsweise 10 bis 100°C und insbesondere 10 bis 35°C durchgeführt. Die Herstellung der erfindungsgemäßen PP-PA-Formmassen erfolgt bei Temperaturen im Bereich von 200 bis 300°C, vorzugsweise 240 bis 280°C, und einer Verweilzeit von 40 bis 300, vorzugsweise von 40 bis 180 Sekunden im beispielsweise fließfähigen, erweichten oder vorzugsweise geschmolzenen Zustand der Aufbaukomponenten (A) bis (C), z.B. durch Rühren, Walzen, Kneten oder Extrudieren, beispielsweise unter Verwendung eines Doppelschnecken- oder Preßspritzmischextrudersoder Kneters.

Nach dem zweckmäßigsten und daher vorzugsweise angewandten Herstellungsverfahren für die erfindungsgemäßen PP-PA-Formmassen werden die Aufbaukomponenten (A) und (C) in einer separaten Verarbeitungsstufe vorvermischt, z.B. durch Einarbeiten von (C) in eine Schmelze aus (A) bei Temperaturen von 200 bis 260°C in üblichen Mischvorrichtungen wie Mischern, Knetern und vorzugsweise Extrudern und anschließend diese Schmelze mit dem PA(B) sowie gegebenenfalls (D) und/oder (E) bei Temperaturen von 240 bis 280°C in einem Extruder, vorzugsweise einem Doppelschneckenextruder, zusammengeschmolzen, die Schmelze extrudiert, abgekühlt und granuliert. Die beiden Verfahrensstufen können auch nacheinander in einer einzigen konstruktiv geeigneten Vorrichtung, z.B. einem Extruder mit einem angeflanschten Seitenextruder, durchgeführt werden. Die erhaltenen Granulate können zwischengelagert oder direkt zur Herstellung von beispielsweise Folien oder vorzugsweise Formkörper verwendet werden.

Die erfindungsgemäßen PP-PA-Formmassen sind homogen und zeigen weder in der Schmelze noch im Granulat oder Formkörper eine Entmischung der Polymerkomponenten. Aus den PP-PA-Formmassen lassen sich leicht Formkörper mit guter Oberflächenbeschaffenheit und verbesserter Schlagzähigkeit bei hoher Steifigkeit, insbesondere bei tiefen Temperaturen, z.B. bei Temperaturen von -40°C, herstellen. Die PP-PA-Formmassen eignen sich ferner zur Herstellung von Folien nach üblichen Verfahren.

Beispiele

Zur Herstellung der erfindungsgemäßen thermoplastischen PP-PA-Formmassen wurden in den Beispielen 1 bis 16 und Vergleichsbeispielen I bis X folgende Aufbaukomponenten eingesetzt.

Polypropylen (A)

PP-A1: Isotaktisches, teilkristallines PP mit einem MFI von 1,5 g/10 min, gemessen bei 190°C mit 21,6 kg Belastung nach DIN 53 735
Das PP besaß einen Schubmodul G (+23°C) von 410 N/mm$^2$ (Novolen® 1300 Z der BASF AG).

PP-A2: Polypropylen-Blockcopolymerisat mit 6 Gew.% polymerisierten Ethyleneinheiten und einem MFI von 1,8 g/10 min gemessen bei 230°C mit 2,16 kg Belastung nach DIN 53 735
Das Polypropylen-polyethylen-Blockcopolymerisat besaß einen Schubmodul G (+23°C) von 600 N/mm$^2$ (Novolen 2300HX der BASF AG).

Polyamid (B)

PA-B1: Polycaprolactam mit einer relativen Viskosität von 3,5 (gemessen in 0,5 gew.%iger Lösung in Phenol/o-Dichlorbenzol im Gewichtsverhältnis 1:1 bei 25°C)

PA-B2: Polyhexamethylensebacinsäureamid mit einer relativen Viskosität von 3,23 (gemessen wie unter PA-B1 beschrieben)

7

Ethylencopolymerisat (C) als Haftvermittler:

C1: Terpolymeres aus Ethylen, n-Butylacrylat und Acrylsäure im Gewichtsverhältnis 65:30:5, hergestellt durch Hochdruckpolymerisation analog den Angaben in der EP-A-0 106 999.
Das Terpolymere besaß einen MFI von 10 g/10 min, gemessen bei 190°C mit einer Belastung von 2,16 kg nach DIN 53 735.

C2: Terpolymeres aus Ethylen, n-Butylacrylat und Maleinsäureanhydrid im Gewichtsverhältnis von 65:35:0,5, hergestellt wie unter C1 genannt.
Das Terpolymere besaß einen MFI von 12 g/10 min, gemessen bei 190°C mit einer Belastung von 2,16 kg.

C3: Terpolymeres aus Ethylen, n-Butylacrylat und Glycidylmethacrylat im Gewichtsverhältnis von 67:30:3, hergestellt wie unter C1 genannt.
Das Terpolymere besaß einen MFI von 9 g/10 min, gemessen bei 190°C mit einer Belastung von 2,16 kg.

Komponente (D):

Zur Verbesserung der Schlagzähigkeit wurden folgende Kautschuke eingesetzt:

D1: Pfropfkautschuk mit einer Pfropfgrundlage (75 Gew.-%) aus Poly-n-Butylacrylat, das mit Butandioldiacrylat umgesetzt wurde und einer Pfropfhülle (25 Gew.-%) aus einem Copolymeren aus Styrol, Acrylnitril und tert.-Butylacrylat (Gew.-Verhältnis 73:24:3), hergestellt durch Emulsionspolymerisation in an sich bekannter Weise. (Mittlerer Teilchendurchmesser $d_{50}$ = 420 nm).

D2: Pfropfkautschuk mit einer Pfropfgrundlage aus Polybutadien (75 %) und einer Pfropfhülle (25 %) aus einem Copolymeren aus Styrol, Acrylnitril und tert.-Butylacrylat (Gew.-Verhältnis 73:24:3), hergestellt durch Emulsionspolymerisation in an sich bekannter Weise. (Mittlerer Teilchendurchmesser $d_{50}$ = 250 nm).
Der mittlere Teilchendurchmesser $d_{50}$ ist der Durchmesser, ober- und unterhalb dessen jeweils 50 Gew.-% der Teilchen liegen.

Verstärkungsmittel (E):

E: Glasfaser Typ R 20 EX 4 der Firma European Owens Corning Fiberglas, B4651 Battice, Belgien

Herstellung der PP-PA-Formmassen

Die Aufbaukomponenten (A) und (C) wurden jeweils in einem vorgeschalteten Verfahrensschritt in einem Zweischneckenextruder bei 240°C zusammengeschmolzen und extrudiert.

Zur Herstellung der PP-PA-Formmassen wurden das Extrudat aus (A) und (C) und die Aufbaukomponente (B) sowie gegebenenfalls das Verstärkungsmittel (E) bei 25°C intensiv gemischt, in einen Zweischneckenextruder eingebracht und bei 250°C aufgeschmolzen, homogenisiert und in ein Wasserbad extrudiert. Nach der Granulierung und Trocknung wurde die Formmasse auf einer Spritzgußmaschine zu Prüfkörpern verarbeitet und an diesen ohne weitere Nachbehandlung die mechanischen Eigenschaften gemessen.

Die Lochschlagzähigkeit wurde nach DIN 53 753, die Schlagzähigkeit nach DIN 53 453, der Elastizitätsmodul nach DIN 53 457 und die Reißdehnung nach DIN 53 455 bestimmt. Die Konditionierung wurde bei 23°C und 50 % rel. Luftfeuchte über 30 Tage vorgenommen.

Die Art und Menge (Gew.%, bezogen auf das Gesamtgewicht der Formmassen) der Aufbaukomponenten und die an den Prüfkörpern gemessenen mechanischen Eigenschaften sind in den folgenden Tabellen 1 und 3 zusammengefaßt.

Tabelle 1 zeigt die mechanischen Eigenschaften der Prüfkörper ohne, Tabelle 2 mit Glasfaserverstärkung. Die Prüfkörper in Tabelle 3 enthalten Modifizierungsmittel (D) zur Verbesserung der Schlagzähigkeit.

Das Vergleichsbeispiel V enthält als Haftvermittler ein mit 1,8 Gew.% Acrylsäure modifiziertes Polypropylen-Copolymerisat mit einem MFI von 30 g/10 min, gemessen bei 230°C mit einer Belastung von 2,16 kg nach DIN 53 735, abgekürzt in der Tabelle 1 PP-AS genannt.

8

Tabelle 1

Beispiele 1 bis 7 und Vergleichsbeispiele I bis V

| Vgl.bsp. | PP | | PA | | Haftvermittler | | mechanische Eigenschaften | | |
|---|---|---|---|---|---|---|---|---|---|
| | Menge | Art | Menge | Art | Menge | Art | E-modul | Reiß- | Lochschlag- |
| Beispiel | [%] | | [%] | | [%] | | | dehnung | zähigkeit |
| | | | | | | | $N/mm^2$ | % | $nJ/m^2$ |
| I | 50 | A1 | 50 | B1 | - | - | 1900 | 3 | 4 |
| II | 50 | A1 | 50 | B2 | - | - | 2000 | 4 | 3 |
| III | 30 | A1 | 70 | B2 | - | - | 2200 | 8 | 12 |
| IV | 50 | A2 | 50 | B1 | - | - | 1600 | 6 | 10 |
| V | 40 | A1 | 50 | B1 | 10 | PP-AS | 1900 | 4 | 7 |
| 1 | 40 | A1 | 50 | B1 | 10 | C1 | 1700 | 22 | 26 |
| 2 | 40 | A1 | 50 | B1 | 10 | C2 | 1600 | 35 | 32 |
| 3 | 40 | A1 | 50 | B1 | 10 | C3 | 1700 | 16 | 21 |
| 4 | 60 | A1 | 30 | B1 | 10 | C2 | 1100 | 120 | 50 |
| 5 | 40 | A1 | 50 | B2 | 10 | C2 | 2000 | 18 | 19 |
| 6 | 40 | A2 | 50 | B1 | 10 | C2 | 1300 | 30 | 41 |
| 7 | 65 | A2 | 30 | B1 | 5 | C2 | 1200 | 140 | 72 |

EP 0 330 015 B1

Tabelle 2

Beispiele 8 bis 12 und Vergleichsbeispiele VI bis VIII

| Vgl.bsp.<br><br>Beispiel | PP<br>Menge<br>[%] | Art | PA<br>Menge<br>[%] | Art | Haftvermittler<br>Menge<br>[%] | Art | Verstär-<br>kungs-<br>mittel<br>Menge | mechanische<br>E-Modul<br><br>N/mm² | Eigenschaften<br>Schlag-<br>zähigkeit<br>nJ/m² |
|---|---|---|---|---|---|---|---|---|---|
| VI | 35 | A1 | 35 | B1 | - | - | 30 E | 7400 | 11 |
| VII | 35 | A1 | 35 | B2 | - | - | 30 E | 7600 | 8 |
| VIII | 35 | A2 | 35 | B1 | - | - | 30 E | 6700 | 12 |
| 8 | 32 | A1 | 32 | B1 | 6 | C2 | 30 E | 6500 | 21 |
| 9 | 32 | A1 | 32 | B2 | 6 | C2 | 30 E | 6800 | 19 |
| 10 | 50 | A1 | 15 | B1 | 5 | C2 | 30 E | 6000 | 25 |
| 11 | 32 | A2 | 32 | B1 | 6 | C2 | 30 E | 6200 | 27 |
| 12 | 32 | A2 | 32 | B1 | 6 | C1 | 30 E | 6400 | 23 |

Tabelle 3
Beispiele 13 bis 16 und Vergleichsbeispiele IX und X

| Vgl.bsp. Beispiel | PP Menge [%] | Art | PA Menge [%] | Art | Haftvermittler Menge [%] | Art | Kautschuk Menge [%] | Art | mechanische Eigenschaften E-Modul N/mm² | Reiß-dehnung % | Lochschlag-zähigkeit nJ/m² |
|---|---|---|---|---|---|---|---|---|---|---|---|
| IX | 50 | A1 | 40 | B1 | - | - | 10 | D1 | 1600 | 7 | 10 |
| X | 50 | A2 | 40 | B1 | - | - | 10 | D1 | 1300 | 12 | 15 |
| 13 | 40 | A1 | 40 | B1 | 10 | C1 | 10 | D1 | 1350 | 56 | 69 |
| 14 | 40 | A2 | 40 | B1 | 10 | C1 | 10 | D1 | 1000 | 86 | 83 |
| 15 | 40 | A1 | 40 | B1 | 10 | C1 | 10 | D2 | 1300 | 60 | 73 |
| 16 | 40 | A2 | 40 | B1 | 10 | C1 | 10 | D2 | 1000 | 92 | 86 |

**Patentansprüche**

1. Thermoplastische Polypropylen-Polyamid-Formmassen, enthaltend jeweils bezogen auf 100 Gew.-Teile der Formmassen

A) 10 bis 89,5 Gew.-Teile mindestens eines Polypropylenmono- und/oder -copolymerisats,

B) 10 bis 89,5 Gew.-Teile mindestens eines Polyamids,

C) 0,5 bis 30 Gew.-Teile eines Ethylencopolymerisats als Haftvermittler, das aufgebaut ist aus

    a) 50 bis 98 Gew.-% Ethylen,

    b) 1 bis 45 Gew.-% mindestens eines Alkyl(meth)acrylat mit 1 bis 8 C-Atomen in einem linearen oder verzweigten Alkylrest mit Ausnahme von tert.-Butyl(meth)acrylat und

    c) 1 bis 40 Gew.-% mindestens eines weiteren Monomeren, das eine gegenüber dem Polyamid reaktive Gruppe gebunden enthält,

wobei die Gew.-Prozente bezogen sind auf das Gesamtgewicht der Monomeren (c), (b) und (c) und stets 100 Gew.-% ergeben.

2.  Thermoplastische Polypropylen-Polyamid-Formmassen nach Anspruch 1, dadurch gekennzeichnet, daß das Monomere (c) ausgewählt wird aus der Gruppe der olefinisch ungesättigten Monocarbonsäuren und den entsprechenden tert.-Butylestern, olefinisch ungesättigten Dicarbonsäuren und den entsprechenden tert.-Butylestern, olefinisch ungesättigten Dicarbonsäureanhydriden, Sulfo-, Sulfonylgruppen aufweisenden olefinisch ungesättigten Monomeren, Oxazolingruppen aufweisenden olefinisch ungesättigten Monomeren und Epoxidgruppen aufweisenden olefinisch ungesättigten Monomeren.

3.  Thermoplastische Polypropylen-Polyamid-Formmassen nach Anspruch 1, dadurch gekennzeichnet, daß das Monomere (c) ausgewählt wird aus der Gruppe der Acrylsäure` Methacrylsäure, Maleinsäure, Fumarsäure und der tert.-Butylestern der vorgenannten Mono- und Dicarbonsäuren und insbesondere Maleinsäureanhydrid.

4.  Thermoplastische Polypropylen-Polyamid-Formmassen nach Anspruch 1, enthaltend als Haftvermittler ein Ethylencopolymerisst, das aufgebaut ist aus

    a) 50 bis 98 Gew.% Ethylen,

    b) 1 bis 45 Gew.% mindestens eines Alkyl(meth)acrylats mit 1 bis 8 C-Atomen in einem linearen oder verzweigten Alkylrest mit Ausnahme von tert.-Butyl(meth)acrylat und

    c) 1 bis 40 Gew.% mindestens eines weiteren Monomeren, das eine gegenüber dem Polyamid reaktive Gruppe gebunden enthält und ausgewählt ist aus der Gruppe der olefinisch ungesättigten Monocarbonsäuren und den entsprechenden tert.-Butylestern, olefinisch ungesättigten Dicarbonsäuren und den entsprechenden tert.-Butylestern, olefinisch ungesättigten Dicarbonsäureanhydriden, Sulfo-, Sulfonylgruppen aufweisenden olefinisch ungesättigten Monomeren, Oxazolingruppen aufweisenden olefinisch ungesättigten Monomeren und Epoxidgruppen aufweisenden olefinisch ungesättigten Monomeren,

wobei die Gew.-Prozente bezogen sind auf das Gesamtgewicht der Monomeren (a), (b) und (c) und stets 100 Gew.% ergeben.

5.  Thermoplastische Polypropylen-Polyamid-Formmassen nach Anspruch 1, enthaltend als Haftvermittler ein Ethylencopolymerisat, das aufgebaut ist aus

    a) 50 bis 98 Gew.% Ethylen,

    b) 1 bis 45 Gew.% n-Butyl(meth)acrylat und/oder 2-Ethylhexyl(meth)acrylatund

    c) 1 bis 40 Gew.% (Meth)acrylsäure, Maleinsäureanhydrid und/oder tert.-Butyl(meth)acrylat

wobei die Gew.-Prozente bezogen sind auf das Gesamtgewicht der Monomeren (a), (b) und (c) und stets 100 Gew.% ergeben.

6.  Thermoplastische Polypropylen-Polyamid-Formmassen, bestehend aus, jeweils bezogen auf 100 Gew.-Teile der Formmassen,

    A) 10 bis 89,5 Gew.-Teilen mindestens eines Polypropylen-homo- und/oder -copolymerisats,

    B) 10 bis 89,5 Gew.-Teilen mindestens eines Polyamids,

    C) 0,5 bis 30 Gew.-Teilen eines Ethylencopolymerisats als Haftvermittler, das aufgebaut ist aus,

        a) 50 bis 98 Gew.% Ethylen,

        b) 1 bis 45 Gew.% mindestens einem Alkyl(meth)acrylat mit 1 bis 8 C-Atomen in einem linearen oder verzweigten Alkylrest mit Ausnahme von tert.-Butyl(meth)acrylat und

        c) 1 bis 40 Gew.% mindestens einem weiteren Monomeren, das eine gegenüber dem Polyamid reaktive Gruppe gebunden enthält.

    D) 0 bis 30 Gew.-Teilen eines schlagzäh modifizierenden Mittels und

    E) 0 bis 60 Gew.-Teilen eines Verstärkungsmittels und/oder Zusatzstoffes.

**7.** Thermoplastische Polypropylen-Polyamid-Formmassen, bestehend aus, jeweils bezogen auf 100 Gew. -Teile der Formmassen,

A) 10 bis 89,5 Gew.-Teilen mindestens eines Polypropylen-homo- und/oder -copolymerisats,

B) 10 bis 89,5 Gew.-Teilen mindestens eines Polyamids,

C) 0,5 bis 30 Gew.-Teilen eines Ethylencopolymerisats als Haftvermittler, das aufgebaut ist aus, jeweils bezogen auf (C),

a) 50 bis 98 Gew.% Ethylen,

b) 1 bis 45 Gew.% mindestens eines Alkyl(meth)acrylats mit 1 bis 8 C-Atomen in einem linearen oder verzweigten Alkylrest mit Ausnahme von tert.-Butyl(meth)acrylat und

c) 1 bis 40 Gew.% mindestens eines weiteren Monomeren, das eine gegenüber dem Polyamid (B) reaktive Gruppe gebunden enthält und ausgewählt ist aus der Gruppe der olefinisch ungesättigten Monocarbonsäuren und den entsprechenden tert.-Butylestern, olefinisch ungesättigten Dicarbonsäuren und den entsprechenden tert.-Butylestern, olefinisch ungesättigten Dicarbonsäureanhydriden, Sulfo-, Sulfonylgruppen aufweisenden olefinisch ungesättigten Monomeren, Oxazolingruppen aufweisenden olefinisch ungesättigten Monomeren und Epoxidgruppen aufweisenden olefinisch ungesättigten Monomeren,

D) 0 bis 30 Gew.-Teilen eines schlagzäh modifizierenden Mittels und

E) 0 bis 60 Gew.-Teilen eines Verstärkungsmittels und/oder Zusatzstoffes.

**8.** Thermoplastische Polypropylen-Polyamid-Formmassen, bestehend aus, jeweils bezogen auf 100 Gew.- Teile der Komponenten (A) bis (E)

A) 10 bis 89,5 Gew.-Teilen mindestens eines Polypropylen-homo- und/oder -copolymerisats,

B) 10 bis 89,5 Gew.-Teilen mindestens eines Polyamids,

C) 0,5 bis 30 Gew.-Teilen eines Ethylencopolymerisats als Haftvermittler, das aufgebaut ist aus, jeweils bezogen auf (C)

a) 50 bis 98 Gew.% Ethylen,

b) 1 bis 45 Gew.% n-Butyl(meth)acrylat und/oder 2-Ethylhexyl(meth)acrylatund

c) 1 bis 40 Gew.% (Meth)acrylsäure, Maleinsäureanhydrid und/oder tert.-Butyl(meth)acrylat,

D) 0 bis 30 Gew.-Teilen eines schlagzäh modifizierenden Mittels und

E) 0 bis 60 Gew.-Teilen eines Verstärkungsmittels und/oder Zusatzstoffes.

**9.** Verfahren zur Herstellung von Polypropylen-Polyamid-Formmassen nach einem der Ansprüche 1 bis 8 durch Zusammenschmelzen der Komponenten (A) bis (C) sowie gegebenenfalls (D) und/oder (E) in einer üblichen Mischvorrichtung, vorzugsweise in einem Extruder bei einer Temperatur im Bereich von 200 bis 300°C und einer Verweilzeit von 40 bis 300 Sekunden.

**10.** Verwendung der thermoplastischen Polypropylen-Polyamid-Formmassen nach einem der Ansprüche 1 bis 8 zur Herstellung von Formkörpern.

**11.** Formkörper, erhältlich aus thermoplastischen Polypropylen-Polyamid-Formmassen gemäß einem der Ansprüche 1 bis 8.

**Claims**

**1.** A thermoplastic polypropylene/polyamide molding material containing, based in each case on 100 parts by weight of molding material,

A) from 10 to 89.5 parts by weight of at least one polypropylene homo- and/or copolymer,

B) from 10 to 89.5 parts by weight of at least one polyamide

and

C) from 0.5 to 30 parts by weight of an ethylene copolymer as an adhesion promoter, which is composed of

a) from 50 to 98% by weight of ethylene,

b) from 1 to 45% by weight of at least one alkyl (meth)acrylate having 1 to 8 carbon atoms in a linear or branched alkyl radical, with the exception of tert-butyl (meth)acrylate, and

c) from 1 to 40% by weight of at least one further monomer which contains a bound group reactive toward the polyamide,

the percentages by weight being based on the total weight of the monomers (a), (b) and (c) and always giving 100% by weight.

2. A thermoplastic polypropylene/polyamide molding material as claimed in claim 1, wherein the monomer (c) is selected from the group consisting of the olefinically unsaturated monocarboxylic acids and the corresponding tert-butyl esters, olefinically unsaturated dicarboxylic acids and the corresponding tert-butyl esters, olefinically unsaturated dicarboxylic anhydrides, sulfo- and sulfonyl-containing olefinically unsaturated monomers, oxazolyl-containing olefinically unsaturated monomers and epoxy-containing olefinically unsaturated monomers.

3. A thermoplastic polypropylene/polyamide molding material as claimed in claim 1, wherein the monomer (c) is selected from the group consisting of acrylic acid, methacrylic acid, maleic acid, fumaric acid and the tert-butyl esters of the abovementioned mono- and dicarboxylic acids and in particular maleic anhydride.

4. A thermoplastic polypropylene/polyamide molding material as claimed in claim 1, containing, as an adhesion promoter, an ethylene copolymer which is composed of
   a) from 50 to 98% by weight of ethylene,
   b) from 1 to 45% by weight of at least one alkyl (meth)acrylate having 1 to 8 carbon atoms in a linear or branched alkyl radical, with the exception of tert-butyl (meth)acrylate, and
   c) from 1 to 40% by weight of at least one further monomer which contains a bound group reactive toward the polyamide and is selected from the group consisting of the olefinically unsaturated monocarboxylic acids and the corresponding tert-butyl esters, olefinically unsaturated dicarboxylic acids and the corresponding tert-butyl esters, olefinically unsaturated dicarboxylic anhydrides, sulfo- and sulfonyl-containing olefinically unsaturated monomers, oxazolyl-containing olefinically unsaturated monomers and epoxy-containing olefinically unsaturated monomers,
   the percentages by weight being based on the total weight of the monomers (a), (b) and (c) and always giving 100% by weight.

5. A thermoplastic polypropylene/polyamide molding material as claimed in claim 1, containing, as an adhesion promoter, an ethylene copolymer which is composed of
   a) from 50 to 98% by weight of ethylene,
   b) from 1 to 45% by weight of n-butyl (meth)acrylate and/or 2-ethylhexyl (meth)acrylate and
   c) from 1 to 40% by weight of (meth)acrylic acid, maleic anhydride and/or tert-butyl (meth)acrylate,
   the percentages by weight being based on the total weight of the monomers (a), (b) and (c) and always giving 100% by weight.

6. A thermoplastic polypropylene/polyamide molding material consisting of, based in each case on 100 parts by weight of molding material,
   A) from 10 to 89.5 parts by weight of at least one polypropylene homo- and/or copolymer,
   B) from 10 to 89.5 parts by weight of at least one polyamide,
   C) from 0.5 to 30 parts by weight of an ethylene copolymer as an adhesion promoter, which is composed of
      a) from 50 to 98% by weight of ethylene,
      b) from 1 to 45% by weight of at least one alkyl (meth)acrylate having 1 to 8 carbon atoms in a linear or branched alkyl radical, with the exception of tert-butyl (meth)acrylate, and
      c) from 1 to 40% by weight of at least one further monomer which contains a bound group reactive toward the polyamide,
   D) from 0 to 30 parts by weight of an impact modifier and
   E) from 0 to 60 parts by weight of a reinforcing agent and/or additive.

7. A thermoplastic polypropylene/polyamide molding material consisting of, based in each case on 100 parts by weight of the molding material,
   A) from 10 to 89.5 parts by weight of at least one polypropylene homo- and/or copolymer,
   B) from 10 to 89.5 parts by weight of at least one polyamide,
   C) from 0.5 to 30 parts by weight of an ethylene copolymer as an adhesion promoter, which is composed of, based in each case on (C),
      a) from 50 to 98% by weight of ethylene,
      b) from 1 to 45% by weight of at least one alkyl (meth)acrylate having 1 to 8 carbon atoms in a linear or branched alkyl radical, with the exception of tert-butyl (meth)acrylate, and

c) from 1 to 40% by weight of at least one further monomer which contains a bound group reactive toward the polyamide (B) and is selected from the group consisting of the olefinically unsaturated monocarboxylic acids and the corresponding tert-butyl esters, olefinically unsaturated dicarboxylic acids and the corresponding tert-butyl esters, olefinically unsaturated dicarboxylic anhydrides, sulfo- and sulfonyl-containing olefinically unsaturated monomers, oxazolyl-containing olefinically unsaturated monomers and epoxy-containing olefinically unsaturated monomers,

D) from 0 to 30 parts by weight of an impact modifier and

E) from 0 to 60 parts by weight of a reinforcing agent and/or additive.

8. A thermoplastic polypropylene/polyamide molding material consisting of, based in each case on 100 parts by weight of the components (A) to (E),

A) from 10 to 89.5 parts by weight of at least one polypropylene homo- and/or copolymer,

B) from 10 to 89.5 parts by weight of at least one polyamide,

C) from 0.5 to 30 parts by weight of an ethylene copolymer as an adhesion promoter, which is composed of, based in each case on (C),

a) from 50 to 98% by weight of ethylene,

b) from 1 to 45% by weight of n-butyl (meth)acrylate and/or 2-ethylhexyl (meth)acrylate and

c) from 1 to 40% by weight of (meth)acrylic acid, maleic anhydride and/or tert-butyl (meth)-acrylate,

D) from 0 to 30 parts by weight of an impact modifier and

E) from 0 to 60 parts by weight of a reinforcing agent and/or additive.

9. A process for the preparation of a polypropylene/polyamide molding material as claimed in any of claims 1 to 8 by melting components (A) to (C) and, if required, (D) and/or (E) together in a conventional mixing apparatus, preferably an extruder, at from 200 to 300 °C and during a residence time of from 40 to 300 seconds.

10. Use of a thermoplastic polypropylene/polyamide molding material as claimed in any of claims 1 to 8 for the production of moldings.

11. A molding obtainable from a thermoplastic polypropylene/polyamide molding material as claimed in any of claims 1 to 8.

## Revendications

1. Matières à mouler de polypropylène-polyamide, thermoplastiques, contenant, rapportées à chaque fois à 100 parties en poids des matières à mouler,

A) 10 à 89,5 parties en poids d'au moins un homo- et/ou copolymère du propylène,

B) 10 à 89,5 parties en poids d'au moins un polyamide,

C) 0,5 à 30 parties en poids d'un copolymère de l'éthylène servant d'agent conférant de l'adhésivité, qui est constitué de

a) 50 à 98% en poids d'éthylène,

b) 1 à 45% en poids d'au moins un (méth)acrylate d'alkyle dont le radical alkyle, linéaire ou ramifié, comporte de 1 à 8 atomes de carbone, à l'exclusion du (méth)acrylate de tert-butyle et

c) 1 à 40% en poids d'un monomère supplémentaire, qui contient en liaison un groupe réactif vis-à-vis du polyamide,

où les pourcentages pondéraux sont rapportés au poids total des monomères (a), (b) et (c) et constituent toujours 100% en poids.

2. Matières à mouler de polypropylène-polyamide, thermoplastiques, suivant la revendication 1, caractérisées en ce que le monomère (c) est choisi dans le groupe formé des acides monocarboxyliques, oléfiniquement insaturés et les esters tert-butyliques correspondants, les acides dicarboxyliques, oléfiniquement insaturés et les esters tert-butyliques correspondants, les anhydrides d'acides dicarboxyliques, oléfiniquement insaturés, les monomères oléfiniquement insaturés, présentant des groupes sulfo, sulfonyle, des monomères oléfiniquement insaturés, présentant des groupes oxazoline et des monomères oléfiniquement insaturés, présentant des groupes époxyde.

**3.** Matières à mouler de polypropylène-polyamide, thermoplastiques, suivant la revendication 1, caractérisées en ce que le monomère (c) est choisi dans le groupe formé par l'acide acrylique, l'acide méthacrylique, l'acide maléique, l'acide fumarique et les esters tert-butyliques des acides mono- et dicarboxyliques susmentionnés et, plus particulièrement, l'anhydride maléique.

**4.** Matières à mouler de polypropylène-polyamide, thermoplastiques, suivant la revendication 1, caractérisées en ce qu'elles contiennent, à titre d'agent conférant de l'adhésivité, un copolymère de l'éthylène, qui est constitué de

a) 50 à 98% en poids d'éthylène,

b) 1 à 45% en poids d'au moins un (méth)acrylate d'alkyle dont le radical alkyle, linéaire ou ramifié, comporte de 1 à 8 atomes de carbone, à l'exclusion du (méth)acrylate de tert-butyle et

c) 1 à 40% en poids d'au moins un monomère supplémentaire, qui contient en liaison un radical réactif avec le polyamide et qui est choisi dans le groupe formé par les acides monocarboxyliques, oléfiniquement insaturés et les esters tert-butyliques correspondants, les acides dicarboxyliques, oléfiniquement insaturés et les esters tert-butyliques correspondants, les anhydrides d'acides dicarboxyliques, oléfiniquement insaturés, les monomères oléfiniquement insaturés, présentant des radicaux sulfo, sulfonyle, les monomères oléfiniquement insaturés, présentant des groupes oxazoline et les monomères oléfiniquement insaturés, présentant des radicaux époxyde,

où les pourcentages pondéraux sont rapportés au poids total des monomères (a), (b) et (c) et constituent toujours 100% en poids.

**5.** Matières à mouler de polypropylène-polyamide, thermoplastiques, suivant la revendication 1, caractérisées en ce qu'elles contiennent, à titre d'agent conférant de l'adhésivité, un copolymère de l'éthylène, qui est constitué de

a) 50 à 98% en poids d'éthylène,

b) 1 à 45% en poids de (méth)acrylate de n-butyle et/ou de (méth)acrylate de 2-éthylhexyle et

c) 1 à 40% en poids d'acide (méth)acrylique, d'anhydride maléique et/ou de (méth)acrylate de tert-butyle,

où les pourcentages pondéraux sont rapportés au poids total des monomères (a), (b) et (c) et constituent toujours 100% en poids.

**6.** Matières à mouler de polypropylène-polyamide, thermoplastiques, qui se composent de, rapportées à chaque fois à 100 parties en poids des matières à mouler,

A) 10 à 89,5 parties en poids d'au moins un homo et/ou copolymère du polypropylène,

B) 10 à 89,5 parties en poids d'au moins un polyamide,

C) 0,5 à 30 parties en poids d'un copolymère de l'éthylène servant d'agent conférant de l'adhésivité, qui est constitué de

a) 50 à 98% en poids d'éthylène,

b) 1 à 45% en poids d'au moins un (méth)acrylate d'alkyle dont le radical alkyle, linéaire ou ramifié, comporte de 1 à 8 atomes de carbone, à l'exclusion du (méth)acrylate de tert-butyle et

c) 1 à 40% en poids d'au moins un monomère supplémentaire, qui contient en liaison un radical réactif avec le polyamide,

D) 0 à 30 parties en poids d'un agent modificateur conférant de la résilience et

E) 0 à 60 parties en poids d'un agent de renforcement et/ou d'un additif.

**7.** Matières à mouler de polypropylène-polyamide, thermoplastiques, qui se composent de, rapportées à chaque fois à 100 parties en poids des matières à mouler,

A) 10 à 89,5 parties en poids d'au moins un homo- et/ou copolymère du polypropylène,

B) 10 à 89,5 parties en poids d'au moins un polyamide,

C) 0,5 à 30 parties en poids d'un copolymère de l'éthylène servant d'agent conférant de l'adhésivité, qui est constitué de, à chaque fois par rapport à (C),

a) 50 à 98% en poids d'éthylène,

b) 1 à 45% en poids d'au moins un (méth)acrylate d'alkyle dont le radical alkyle, linéaire ou ramifié, comporte de 1 à 8 atomes de carbone, à l'exclusion du (méth)acrylate de tert-butyle et

c) 1 à 40% en poids d'au moins un monomère supplémentaire, qui contient en liaison un radical réactif avec le polyamide (B) et qui est choisi dans le groupe formé par les acides monocarboxyliques, oléfiniquement insaturés et les esters tert-butyliques correspondants, les acides dicarboxyliques, oléfiniquement insaturés et les esters tert-butyliques correspondants, les anhydrides

16

d'acides carboxyliques, oléfiniquement insaturés, les monomères oléfiniquement insaturés, présentant des radicaux sulfo, sulfonyle, les monomères oléfiniquement insaturés, présentant des radicaux oxazoline et les monomères oléfiniquement insaturés, comportant des radicaux époxyde,

D) 0 à 30 parties en poids d'un agent modificateur conférant de la résilience et

E) 0 à 60 parties en poids d'un agent de renforcement et/ou d'un additif.

8. Matières à mouler de polypropylène-polyamide, thermoplastiques, constituées de, rapportées à chaque fois à 100 parties en poids des composants (A) à (E),

A) 10 à 89,5 parties en poids d'au moins un homo- et/ou copolymère du polypropylène,

B) 10 à 89,5 parties en poids d'au moins un polyamide,

C) 0,5 à 30 parties en poids d'un copolymère de l'éthylène servant d'agent conférant de l'adhésivité, qui est constitué, à chaque fois par rapport à (C), de

a) 50 à 98% en poids d'éthylène,

b) 1 à 45% en poids de (méth)acrylate de n-butyle et/ou de (méth)acrylate de 2-éthylhexyle et

c) 1 à 40% en poids d'acide (méth)acrylique, d'anhydride maléique et/ou de (méth)acrylate de tert-butyle,

D) 0 à 30 parties en poids d'un agent modificateur conférant de la résilience et

E) 0 à 60 parties en poids d'un agent de renforcement et/ou d'un additif.

9. Procédé de préparation de matières à mouler de polypropylène-polyamide suivant l'une quelconque des revendications 1 à 8, par la fusion commune des composants (A) à (C), comme éventuellement aussi (D) et/ou (E) dans une installation de mélange usuelle, de préférence dans une extrudeuse, à une température qui varie de 200 à 300°C et pendant une durée de séjour qui fluctue de 40 à 300 secondes.

10. Utilisation des matières à mouler de polypropylène-polyamide, thermoplastiques suivant l'une quelconque des revendications 1 à 8 en vue de la fabrication d'articles moulés.

11. Articles moulés que l'on peut obtenir à partir des matières à mouler de polypropylène-polyamide, thermoplastiques suivant l'une quelconque des revendications 1 à 8.